Europäisches Patentamt

**European Patent Office**

**Office européen des brevets**

(11) Veröffentlichungsnummer: **0 173 769**

**B1**

(12) # EUROPÄISCHE PATENTSCHRIFT

(45) Veröffentlichungstag der Patentschrift:
08.03.89

(51) Int. Cl.⁴: **G 06 F 13/14**

(21) Anmeldenummer: **84115742.3**

(22) Anmeldetag: **18.12.84**

(54) **Anordnung zur Prioritätsvergabe.**

(30) Priorität: **05.09.84 DE 3432656**

(43) Veröffentlichungstag der Anmeldung:
**12.03.86 Patentblatt 86/11**

(45) Bekanntmachung des Hinweises auf die Patenterteilung:
**08.03.89 Patentblatt 89/10**

(84) Benannte Vertragsstaaten:
**AT DE FR GB IT NL**

(56) Entgegenhaltungen:
**EP-A-0 076 196**
**US-A-3 643 218**

**IBM TECHNICAL DISCLOSURE BULLETIN, Band 17, Nr. 7, Dezember 1974, Seiten 2052-2053, New York, US; N.T. CHRISTENSEN: "Programmable priority mechanism"**

(73) Patentinhaber: **Siemens Aktiengesellschaft Berlin und München, Wittelsbacherplatz 2, D-8000 München 2 (DE)**

(72) Erfinder: **Wagner, Wolfgang, Dipl.- Ing., Wachenheimer Strasse 15, D-8000 München 90 (DE)**

**Beschreibung**

Die Erfindung betrifft eine Anordnung zur Prioritätsvergabe bei mehreren Anforderungskanälen gemäß dem Oberbegriff des Anspruchs 1.

Beim Parallelbetrieb mehrerer Prozessoren oder anderer selbstständig arbeitender Einheiten muß sichergestellt werden, daß immer nur ein Prozessor die Kontrolle über gemeinsame Anordnungen, beispielsweise über Datenbusse, Steuerleitungen, Speicher usw., hat und daß sich alle anderen im Wartezustand befinden. Dabei dient eine Anordnung zur Prioritätsvergabe dazu, aus mehreren gleichzeitigen Anforderungen diejenige auszusuchen, welche im betreffenden Zeitpunkt die höchste Priorität hat.

Bei der Prioritätszuteilung unterscheidet man zwei Prioritätsarten. In einem Prioritätschema mit festen Prioritäten verändert sich die Prioritätsreihenfolge nicht. Ein Beispiel dafür ist eine aus hintereinandergeschalteten Flip-Flops aufgebaute Prioritätskette. Dagegen werden bei einer rotierenden Priorität alle Anforderungen als gleich wichtig betrachtet, wobei die Prioritäten dynamisch veränderbar sind. Dadurch können beispielsweise den Prozessoren mit häufigen Anforderungsswünschen zeitweise niedere Prioritäten zugeteilt werden, so daß Prozessoren mit seltenen Anforderungswünschen durch eine hohe Prioritätszuteilung den gewünschten Zugriff erhalten und nicht blockiert werden.

Aus der europäischen Offenlegungsschrift EP-A-76 196 ist eine Matrixanordnung zur Prioritätsvergabe mit der Möglichkeit zwischen festen und rotierenden Prioritäten umzuschalten, bekannt. Jeder Anforderungskanal ist dabei mit einem Ausgangskanal über ein sperrendes Schaltelement verbunden, das wiederum über einen Decoder ausgewählt werden muß. Eine Schaltungsanordnung zur rein gruppenweisen Prioritätsvergabe ist beispielsweise aus der Patentschrift US-A-3 643 218 bekannt. In der Druckschrift IBM Technical Disclosure Bulletin, Band 17, Nr. 7, Dezember 1974 ist auf den S. 2052 bis 2053 eine programmierbare Prioritätsanordnung vorbeschrieben, die eine dynamische Umschaltung unter N gleichwertigen Prozessoren durchführt, indem N-1 Register zur Aufnahme verschlüsselter Prozessordaten vorgesehen sind.

Der Erfindung lag die Aufgabe zugrunde, eine Anordnung zur Prioritätsvergabe der o.g. Art anzugeben, die es ermöglicht, die Priorität jeder Anforderung individuell einzustellen und gruppenweise gleiche Prioritäten zuzuteilen.

Diese Aufgabe wird gemäß dem kennzeichnenden Teil des Anspruchs 1 gelöst. Weiterbildungen der Erfindung ergeben sich aus den Unteransprüchen.

Die Erfindung hat den Vorteil, daß mit einem geringen Schaltungsaufwand eine hohe Flexibilität der Prioritätszuordnung erreicht wird. Es können sowohl feste und rotierende Prioritäten als auch auf einfache Weise an die jeweiligen Erfordernisse anpaßbare Kombinationen aus beiden realisiert werden. Dabei ist das Rotationsverfahren fair gegenüber seltenen Anforderungen. Durch die erfindungsgemäße Matrixstruktur und die Verwendung identischer Zellen ist die Anordnung gut für integrierte Schaltungen geeignet, da das Duplizieren von Zellen den Aufwand zur Herstellung des Layouts vereinfacht.

Eine Weiterbildung der Erfindung, bei der das gewünschte Prioritätsschema über ein Datenverarbeitungsprogramm einstellbar ist, hat den Vorteil, daß die Priorität der einzelnen Anforderungskanäle unabhängig voneinander eingestellt werden kann, und somit die Modularität erhöht wird.

Im folgenden wird die Erfindung anhand eines Ausführungsbeispieles weiter beschrieben.

Fig. 1 zeigt schematisch einen ersten Teil eines Prioritätsnetzwerks,
Fig. 2 zeigt einen zweiten Teil des Prioritätsnetzwerks,
Fig. 3 zeigt schematisch den Ablauf einer Prioritätsrotation,
Fig. 4 zeigt einen dritten Teil des Prioritätsnetzwerkes,
Fig. 5 zeigt Einzelheiten eines Matrixelementes,
Fig. 6, 7 zeigen jeweils ein Ausführungsbeispiel der Erfindung.

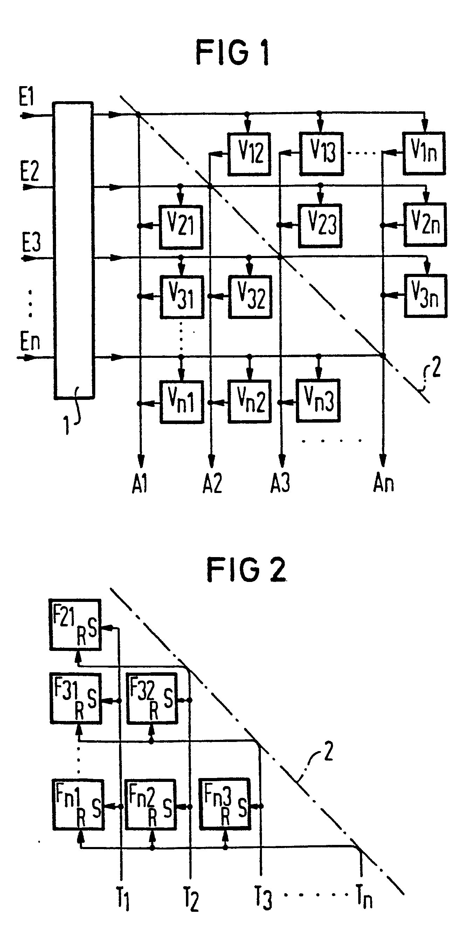

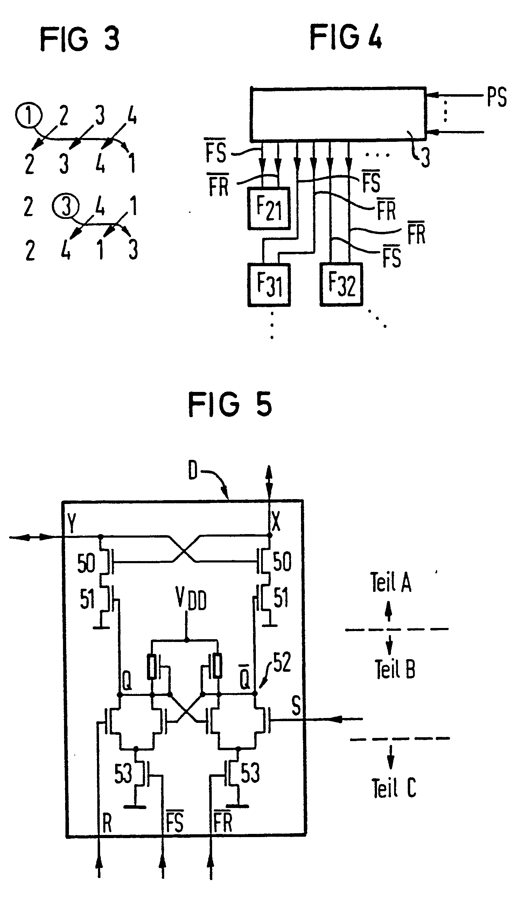

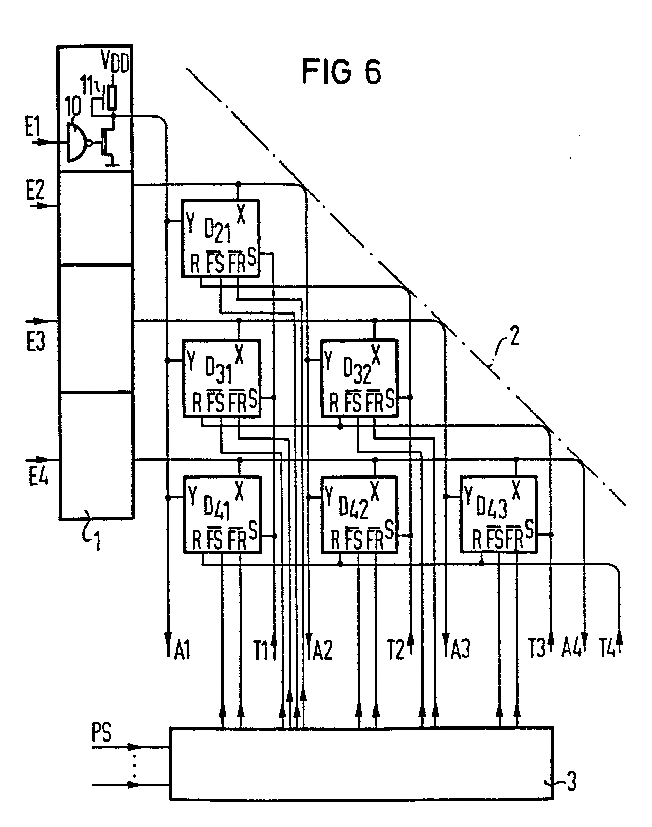

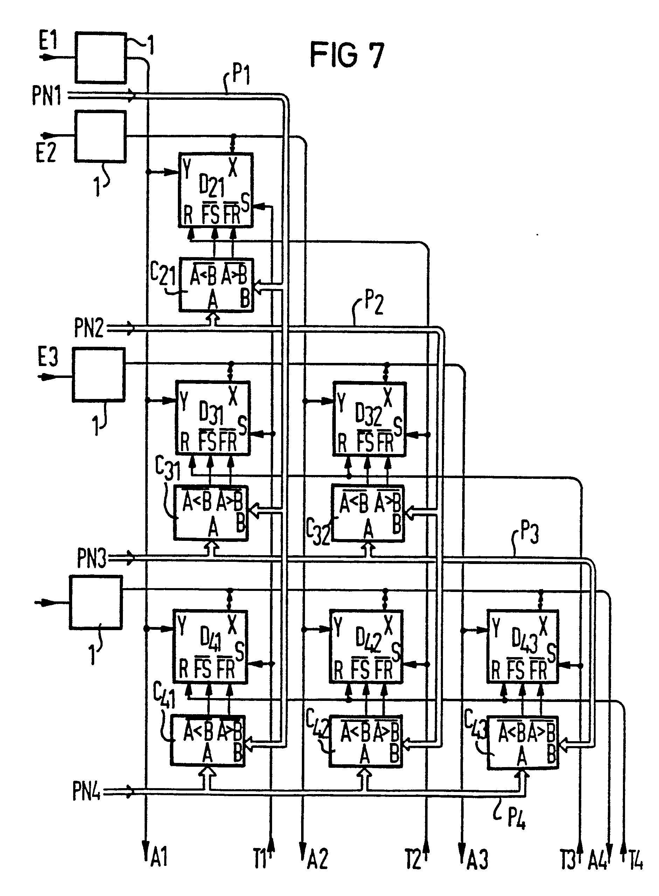

Die Anordnung zur Prioritätsvergabe ist erfindungsgemäß als Netzwerk verschaltet. Um die Wiedergabe übersichtlich zu gestalten, ist es in drei an sich zusammengeschalteten Teilen A, B, C gemäß den Figuren 1, 2 bzw. 4 dargestellt. Die dabei in den Knotenpunkten jeweils schematisch wiedergegebenen Teilschaltungen sind entsprechend in einem Matrixelement $D_{ij}$ gemäß Fig. 5 realisiert. Eine vollständige Wiedergabe eines Netzwerks findet sich beispielhaft jeweils in den Figuren 6, 7.

Wie Fig. 1 anhand des Teiles A zeigt, weist das Prioriätsnetzwerk mehrere Anforderungskanäle $E_i$ (i = 1 bis n), ebensoviele Ausgangskanäle $A_j$ (j = 1 bis n) auf. Jeder Anforderungskanal $E_i$ ist mit einem Ausgangskanal $A_i$ fest verbunden (im Beispiel entlang einer Hauptdiagonalen 2) und an den übrigen Kreuzungspunkten mit den übrigen Ausgangskanälen $A_j$ jeweils über ein Schaltelement $V_{ij}$ verbunden. Eingangsseitig ist der Matrix eine Entkopplungsanordnung 1 vorgeschaltet.

In dieser Matrixanordnung wird aus gleichzeitigen Prioritätsanforderungen auf den Anforderungskanälen $E_i$ diejenige ausgesucht, welche die höchste aktuelle Priorität hat. Da jeder Kanal jede Position innerhalb der Prioritätsreihenfolge einnehmen kann, werden alle Kanäle schaltungstechnisch gleich behandelt: Jeder Anforderungskanal $E_i$ muß also auf ein mögliches Anforderungssignal eines jeden anderen Anforderungskanals hin geprüft werden. Liegt eine Anforderung auf einem der Kanäle $E_i$ vor, so unterdrückt das Schaltelement

$V_{ij}$ die Anforderung auf den übrigen Kanälen (j ≠ i), wenn der Kanal $E_i$ eine höhere aktuelle Priorität hat als der Kanal $E_j$. Auf diese Weise verbleibt nur die höchstpriore Anforderung, d. h. nur ein Ausgangskanal $A_i$ ist aktiv.

Fig. 2 zeigt anhand des Teiles B eine vereinfachte Schaltung des Prioritätsnetzwerkes bei welcher durch eine Faltung entlang der Hauptdiagonalen 2 eine Dreiecksmatrix entsteht. Um eine rotierende Prioritätsreihenfolge zu realisieren, ist jedem Schaltelement $V_{ij}$ jeweils ein Steuerelement, vorteilhafterweise ein Flip-Flop $F_{ij}$, zur Speicherung der Priorität eines Anforderungskanals $E_i$ gegenüber einem weiteren Anforderungskanal $E_j$ vorgeschaltet. Durch Vorbesetzen der Flip-Flops $F_{ij}$ wird die aktuelle Prioritätsreihenfolge festgelegt. Werden die Flip-Flops in einem bestimmten Zustand festgehalten, entsteht ein Prioritätsschema mit festen Prioriäten. Bei einem dynamischen Umschalten rotieren die Prioritäten.

Eine Kombination aus festgehaltenen und dynamisch geschalteten Flip-Flops $F_{ij}$ ermöglicht flexible Prioritätsschemata mit festen Prioritäten und Gruppenbildungen, innerhalb derer die Prioritäten rotieren.

Fig. 3 zeigt schematisch zwei Beispiele einer rotierenden Priorität innerhalb von Gruppen von jeweils vier Anforderungskanälen $E_i$ (i = 1 bis 4), die als untereinander gleich wichtig vorgegeben sind. Jeder Gruppe ist ein gemeinsamen Bereich in der ansonsten variablen Prioritätsreihenfolge fest zugewiesen.

Im oberen Beispiel wird die Anforderung des Kanals $E_1$ bearbeitet. Während der Bearbeitung wird dieser Kanal innerhalb des Gruppenbereichs in der Prioritätsreihenfolge hinter die anderen Kanäle eingereiht. Ihm wird also die niederste Priorität eingeräumt, während die anderen Kanäle $E_2$, $E_3$, $E_4$ jeweils um einen Platz nach vorne aufrücken.

Im zweiten Beispiel ist der an zweiter Stelle stehende Kanal $E_3$ in Bearbeitung. Er wird deshalb ebenfalls innerhalb der Prioritätsreihenfolge weiter nach hinten eingereiht. Beim Aufrücken werden jedoch nur die Kanäle $E_1$, $E_4$ berücksichtigt, welche in der ursprünglichen Reihenfolge niederwertiger als der Kanal $E_3$ bewertet waren. Der ursprünglich vor dem Kanal $E_3$ mit der höchsten Priorität bewertete Kanal $E_2$ behält seine hohe Priorität.

Diese Art des Rotierens belohnt Kanäle mit seltenen Anforderungen dadurch, daß sie in der Prioritätsreihenfolge nach vorne wandern.

Das dynamische Umschalten der Flip-Flops $F_{ij}$ erfolgt gemäß Fig. 2 in der Weise, daß die Setz- und Rücksetzeingänge S, R über Rotationskanäle $T_j$ beaufschlagt werden. Alle Setzeingänge der Flip-Flops $F_{ij}$ einer Spalte sind dabei mit einem, dieser Spalte zugeordneten Rotationseingang verbunden. Ferner liegen an einem durch die Spaltennumerierung i gekennzeichneten Rotationskanal gegebenenfalls alle Rücksetzeingänge R aller Flip-Flops $F_{ij}$.

Die Rotationskanäle $T_j$ werden aktiviert, wenn die Anforderung vom Ausgangskanal j bearbeitet wird. Sollen Flip-Flops $F_{ij}$ in einem bestimmten Zustand festgehalten werden, so hat dies so zu erfolgen, daß die Setz- und Rücksetzeingänge S, R nicht zur Wirkung kommen.

Fig. 4 zeigt in einem Beispiel für den Teil C, auf welche Weise innerhalb eines Prioritätsschemas feste Prioritäten eingestellt werden können. Die Flip-Flops $F_{ij}$ sind dazu jeweils mit Steuersignalen $\overline{FS}$, $\overline{FR}$ beaufschlagt, über welche sie entweder im gesetzten oder im rückgesetzten Zustand festhaltbar sind. Wird keines der Steuersignale $\overline{FS}$, $\overline{FR}$ aktiviert, so ist das zugehörige Flip-Flop über seine Setz- und Rücksetzeingänge S, R dynamisch schaltbar. Die Steuersignale $\overline{FS}$, $\overline{FR}$ sind an einer Speicheranordnung, beispielsweise einem ROM, einer PLA (Programmable logical array) oder durch eine andere kombinatorische Logik abgreifbar. Sie wird über Adreßleitungen PS angesteuert.

Fig. 5 zeigt ein Realisierungsbeispiel für ein Matrixelement D in MOS-Technologie, zusammengesetzt aus den in den Figuren 1, 2, 4 beschriebenen Funktionsteilen. Die Schaltelemente $V_{ij}$ bestehen aus zwei kreuzgekoppelten FETs 50, die mit entkoppelten Anforderungssignalen $X_i$ bzw. auf den Ausgangskanälen anliegenden Signalen $Y_j$ beaufschlagt sind. Die Steuerelemente bestehen aus weiteren FETs 51 in den gesteuerten Strecken der FETs 50, und aus einem R-S-Flip-Flop 52, über dessen Ausgange Q, $\overline{Q}$ die FETs 51 angesteuert werden. Zur Realisierung der in Teil C beschriebenen Funktion liegen an den Fußpunkten des Flip-Flops 52 FETs 53, welche über die Signale $\overline{FS}$ bzw. $\overline{FR}$ angesteuert werden. Das Festhalten eines Flip-Flopzustandes erfolgt durch Auftrennen des Fußpunktes.

Das Beispiel in Fig. 6 zeigt eine Dreiecksmatrix mit vier Anforderungskanälen $E_1$ bis $E_4$ und vier Ausgangskanälen $A_1$ bis $A_4$. Sie sind mit Matrixelementen $D_{ij}$ (i = 2 bis 4, j = 1 bis i - 1) bestückt. Die Entkopplung der Eingangskanäle $E_i$ erfolgt jeweils über einen Inverter und eine nachgeschaltete Sourceschaltung. Die Signale $\overline{FS}$, $\overline{FR}$ zum Festhalten der Flip-Flopzustände sind in einem über Leitungen PS adressierten ROM gespeichert.

Ein weiteres vorteilhaftes Ausführungsbeispiel der Erfindung zeigt Fig. 7. Dabei ist zum Einstellen des Prioritätsschemas jedem Anforderungskanal $E_i$ ein Prioritätskanal $P_i$ zur Übermittlung einer über ein Programm einer Rechenanlage vorgegebenen Prioritätsnummer $PN_i$ zugeordnet. Diese legt die Wichtigkeit der Anforderung des zugehörigen Kanals $E_i$ fest. Gleiche Prioritätsnummern mehrerer Kanäle $E_i$ führen zu der oben bereits beschriebenen Gruppenbildung. Die Prioritätsnummern $PN_i$ werden paarweise miteinander in Komparatoren $C_{ij}$ verglichen, welche jeweils den Matrixelementen $D_{ij}$ vorgeschaltet sind.

Jeder Komparator $C_{ij}$ vergleicht ein an seinem ersten Eingang A anliegendes Prioritätswort $PN_i$ mit einem an seinem zweiten Eingang B

anliegenden Prioritätswort $PN_j$. In dem wiedergegebenen Beispiel ist das Prioritätswort $PN_i$ den zweiten Eingängen B derjenigen Komparatoren zugeführt, die in der Matrixspalte i angeordnet sind. Ferner ist es den ersten Eingängen A der Komparatoren $C_j$ zugeführt.

Eine kleinere Nummer bedeutet höhere Priorität. Unter der Annahme, daß ein Anforderungskanal $E_i$ eine höhere Priorität als ein Anforderungskanal $E_j$ hat, ist eine Prioritätsnummer $PN_i < PN_j$. In einem Komparator $C_{ij}$ wird daher die Prioritätsnummer $PN_i$ dem Eingang A und die Prioritätsnummer $PN_j$ dem Eingang B zugeführt. Dadurch ist an einem Ausgang $\bar{A} < \bar{B}$ des Komparators $C_{ik}$ eine logische Null abgreifbar, welche als Steuersignal $\bar{FS}$ das zugehörige Flip-Flop $F_{ij}$ im gesetzten Zustand festhält. Ist die Prioritätsnummer $PN_i$ größer $PN_j$, so wird am zweiten Ausgang $\bar{A} > \bar{B}$ eine logische Null abgegriffen, welche als Steuerzeichen $\bar{FR}$ das Flip-Flop im rückgesetzten Zustand festhält. Wenn die Prioritätsnummer $PN_i = PN_j$ ist, so kann das Flip-Flop über seine Setz- und Rücksetzeingänge S, R geschaltet werden. Beide Kanäle gehören dann zur selben Gruppe.

**Patentansprüche**

1. Matrixanordnung zur Prioritätsvergabe bei mehreren mit Anforderungssignalen beaufschlagten Anforderungskanälen ($E_i$) (i = 1 bis n), die mit ebensovielen Ausgangskanälen ($A_j$) (j = 1 bis n) verbunden sind, dadurch gekennzeichnet, daß jeder Anforderungskanal ($E_i$) mit einem Ausgangskanal ($A_i$) unmittelbar und mit den jeweils übrigen Ausgangskanälen ($A_j$, j ≠ i) über Matrixelemente ($D_{ij}$) verbunden ist und daß die Matrixelemente ($D_{ij}$) Steuerelemente ($V_{ij}$, $F_{ij}$) zur Speicherung der Priorität eines Anforderungskanals ($E_i$) gegenüber einem weiteren Anforderungskanal ($E_j$) enthalten.

2. Matrixanordnung nach Anspruch 1, gekennzeichnet durch eine Dreiecksmatrix-Anordnung der Anforderungskanäle ($E_i$), der Ausgangskanäle ($A_j$) und der Matrixelemente ($D_{ij}$).

3. Matrixanordnung nach Anspruch 1 oder 2, dadurch gekennzeichnet, daß die Matrixelemente ($D_{ij}$) zwei kreuzgekoppelte FETs (50, 50) enthalten, die über den zugehörigen Anforderungskanal ($E_i$) mit Anforderungssignalen ($X_i$) und auf dem zugehörigen Ausgangskanal ($A_j$) mit Signalen ($X_j$) beaufschlagt sind.

4. Matrixanordnung nach Anspruch 1 und 3, dadurch gekennzeichnet, daß die Steuerelemente gegenphasig angesteuerte, in den Fußpunkten der kreuzgekoppelten FETs (50, 50) liegende weitere FETs (51, 51) aufweisen.

5. Matrixanordnung nach Anspruch 1 und 4, dadurch gekennzeichnet, daß die Steuerelemente über Flip-Flops (52) ansteuerbar sind.

6. Matrixanordnung nach Anspruch 1 und 5, dadurch gekennzeichnet, daß jedes Steuerelement FETs (53, 53) enthält, die in die Fußpunkte des Flip-Flops (52) geschaltet sind.

7. Matrixanordnung nach einem der vorangehenden Ansprüche, gekennzeichnet durch eine über Adreßleitungen (PS) angesteuerte Speichereinheit (3) zum Beaufschlagen der Steuerelemente.

8. Matrixanordnung nach einem der vorangehenden Ansprüche, gekennzeichnet durch den Steuerelementen vorgeschaltete Komparatoren ($C_{ij}$) zum paarweisen Vergleich von Prioritätsnummern aus einer Rechenanlage.

**Claims**

1. Matrix arrangement for priority allocation in the case of a plurality of request channels ($E_i$) (i = 1 to n) supplied with request signals, said request channels being connected to the same number of output channels ($A_j$) (j = 1 to n), characterized in that each request channel ($E_i$) is directly connected to an output channel ($A_i$) and to the respective remaining output channels ($A_j$, j ≠ i) via matrix elements ($D_{ij}$), and in that the matrix elements ($D_{ij}$) contain control elements ($V_{ij}$, $F_{ij}$) for storing the priority of a request channel ($E_i$) in comparison to a further request channel ($E_j$).

2. Matrix arrangement according to Claim 1, characterized by a triangular matrix arrangement of the request channels ($E_i$), the output channels ($A_j$) and the matrix elements ($D_{ij}$).

3. Matrix arrangement according to Claim 1 or 2, characterized in that the matrix elements ($D_{ij}$) contain two cross-coupled FETs (50, 50) which are supplied with request signals ($X_i$) via the associated request channel ($E_i$) and are supplied with signals ($X_j$) on the associated output channel ($A_j$).

4. Matrix arrangement according to Claims 1 and 3, characterized in that the control elements have further FETs (51, 51), controlled in phase opposition, at the bases of the cross-coupled FETs (50, 50).

5. Matrix arrangement according to Claims 1 and 4, characterized in that the control elements can be controlled via flip-flops (52).

6. Matrix arrangement according to Claims 1 and 5, characterized in that each control element contain FETs (53, 53) which are connected into the bases of the flip-flop (52).

7. Matrix arrangement according to one of the preceding claims, characterized by a memory unit (3), controlled via address lines (PS), for acting upon the control elements.

8. Matrix arrangement according to one of the preceding claims, characterized by the comparators ($C_{ij}$), connected upstream of the control elements, for comparing pairs of priority numbers from a computing system.

## Revendications

1. Dispositif matriciel pour l'attribution de priorité en cas de plusieurs canaux de demande $(E_i)$ (i = 1 à n) alimentés avec des signaux de demande et reliés à autant de canaux de sortie $(A_j)$ (j = 1 à n), caractérisé en ce que chaque canal de demande $(E_i)$ est relié directement à un canal de sortie $(A_i)$ et est relié aux autres canaux de sortie $(A_j, j \neq i)$ à travers des éléments de matrice $(D_{ij})$ et que les éléments de matrice $(D_{ij})$ contiennent des éléments de commande $(V_{ij}, F_{ij})$, pour la mémorisation de la priorité d'un canal de demande $(E_i)$ vis-à-vis d'un autre canal de demande $(E_j)$.

2. Dispositif selon la revendication 1, caractérisé par l'agencement des canaux de demande $(E_i)$, des canaux de sortie $(A_j)$ et des éléments de matrice $(D_{ij})$ dans une matrice triangulaire.

3. Dispositif selon la revendication 1 ou 2, caractérisé en ce que les éléments de matrice $(D_{ij})$ contiennent deux transistors à effet de champ (50, 50) couplés en croix, qui sont alimentés à travers le canal de demande $(E_i)$ associé avec des signaux de demande $(X_i)$ et sont alimentés avec des signaux $(X_j)$ sur le canal de sortie $(A_j)$ correspondant.

4. Dispositif selon les revendications 1 et 3, caractérisé en ce que les éléments de commande présentent des transistors à effet de champ (51, 51) supplémentaires qui sont connectés aux bases des couplages en croix des transistors (50, 50) et sont attaqués en opposition de phase.

5. Dispositif selon les revendications 1 et 4, caractérisé en ce que les éléments de commande . peuvent être attaqués à travers des bascules (52).

6. Dispositif selon les revendications 1 et 5, caractérisé en ce que chaque élément de commande contient des transistors à effet de champ (53, 53) qui sont connectés aux bases de la bascule (52) pour l'attaque de l'élément de commande.

7. Dispositif selon une des revendications précédentes, caractérisé par une unité de mémoire (3) qui est attaquée par des lignes d'adressage (PS) et qui sert à alimenter les éléments de commande.

8. Dispositif selon une des revendications précédentes, caractérisé par des comparateurs $(C_{ij})$ connectés en amont des éléments de commande et servant à la comparaison par paires de numéros de priorité provenant d'un calculateur.

# FIG 1

# FIG 2

# FIG 3

# FIG 4

# FIG 5

# FIG 6

# FIG 7